# EUROPÄISCHE PATENTSCHRIFT

(11) **EP 1 693 288 B1**
(45) Veröffentlichungstag und Bekanntmachung des Hinweises auf die Patenterteilung: **13.08.2008**
(21) Anmeldenummer: 06001778.7
(22) Anmeldetag: 28.01.2006
(51) Int. Cl.: B62J 1/04

(54) **Fahrradsattel mit werkzeuglos verstellbarer Federung**
Bicycle saddle with a spring suspension adjustable without the use of tools
Selle de bicyclette avec une suspension à ressort ajustable sans outils

(43) Veröffentlichungstag der Anmeldung: 23.08.2006
(73) Patentinhaber: Schneider, Werner, 88048 Friedrichshafen (DE)
(72) Erfinder: Schneider, Werner, 88048 Friedrichshafen (DE)

(56) Entgegenhaltungen:
- FR-A- 1 098 639
- FR-A- 1 159 348
- FR-A- 1 409 418
- US-A- 2 211 600
- US-A- 2 446 933

## Beschreibung

Die Erfindung betrifft einen Fahrradsattel gemäß des Oberbegriffs des Anspruchs 1.

Auf dem weltweiten Fahrradmarkt gibt es Fahrräder mit luftgepolsterten, ungefederten und gefederten Fahrradsätteln . Bei gefederten Sätteln wird die Federung meist über Druck- oder Zugfedern aus Stahl bewirkt.

Aus Dokument FR 1 159 348 A ist ein Fahrradsattel gemäß des Oberbegriffs des Anspruchs 1 bekannt.

Mit dem Trekkingfahrrad rund um den Bodensee hat es auf handelsüblichen, gefederten Fahrradsätteln andauernd ernsthafte Sitzprobleme gegeben. Eine körperschonende Sitzeinstellung konnte auch nicht mit einer gefederten Sattelstütze erreicht werden. Letztere war schwer und teuer und hat nur bei harten Stößen funktioniert .

Die zu lösende technische Aufgabe war, eine neuartige Sattelfederung zu erfinden. Zusätzlich sollten alle wichtigen Bauteile wie Satteloberteile (Sitzelemente) und Federpakete (Federelemente) werkzeuglos getauscht werden können, so dass eine der Größe und dem Körpergewicht des Radfahrers angepasste Einstellung jederzeit möglich war. Die wichtigste Forderung aber war eine gedämpfte Federung, mit der ein "Gleiten" ohne abrupte Sattelbewegungen, erzielt werden konnte.

Nach dem Bau und der Erprobung unterschiedlicher Sattel-Prototypen und Federsysteme war die Schwingenfederung erfunden und das Ergebnis beeindruckend. Der Fahrradsattel gemäß des Anspruchs 1 hat mit dem wesentlich besseren Sitz- und Federungskomfort voll überzeugt.

Die Schwinge mit dem Satteloberteil ist radial beweglich mit dem Satteluntergestell verbunden. Zwischen der Schwinge und dem Satteluntergestell befindet sich ein Federpaket (Federelement),auf welchem die Schwinge aufliegt.
Wenn der Fahrradsattel belastet wird, kommt es durch das Gewicht des Radfahrers, und die Hebelwirkung der Schwinge auf das Federpaket, zur Federung.
Das Federpaket besteht aus einem Bundbolzen und den Gummischeiben. Der Bundbolzen wird über zwei Bohrungen im Tragrohr des Satteluntergestells lose geführt und ist zusammen mit den Gummischeiben vertikal beweglich.
Er kann von Hand abgezogen, und nach dem Wechsel der Gummischeiben, z.B. von weich auf hart, wieder aufgesteckt werden.

Am hinteren Ende der Schwinge befindet sich ein Gewindedorn, welcher im Satteluntergestell beweglich geführt wird. Mit einem Sterngriff am Gewindedorn wird das Öffnen und Schließen des Sattels ermöglicht.
Gleichzeitig kann damit auch das Federpaket bei Bedarf vorgespannt und das Ein- und Ausfedern über den Sterngriff eingestellt werden. Bei extremen Federbewegungen, z.B. durch Schlaglöcher, wird der Rückschlag ebenfalls mit Gummischeiben gedämpft.

Nach dem Lösen der 2 Sterngriffe am Satteloberteil kann das Sitzelement in der Länge verstellt oder gegen ein anderes ausgetauscht werden.

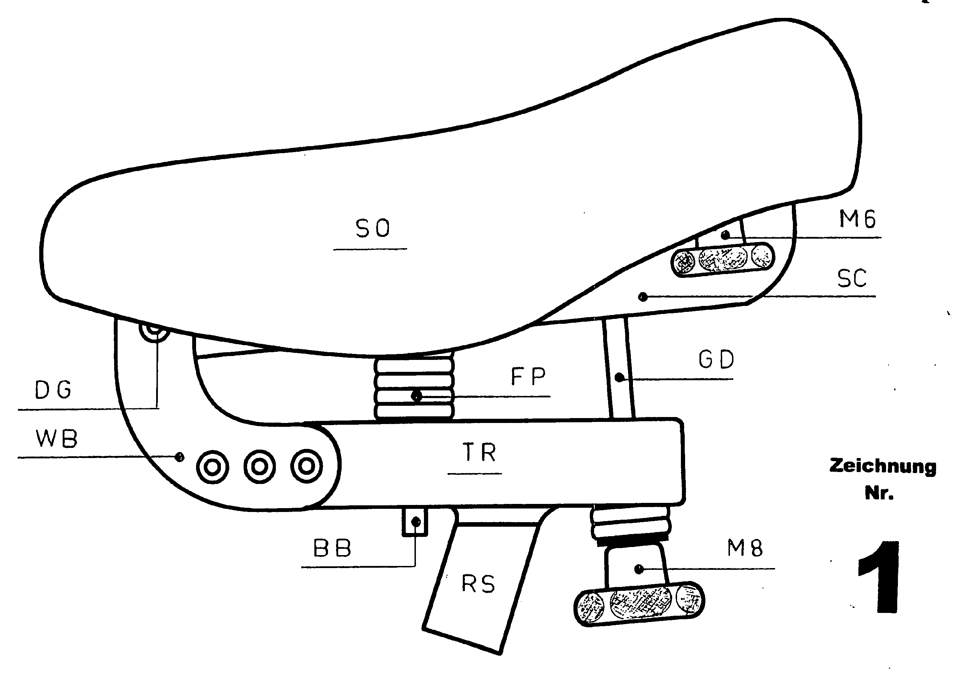

Die Erfindung wird im folgenden anhand der Zeichnungen 1-4 näher erläutert. Zum besseren Verständnis ist auf einem gesonderten Blatt eine Zeichnungsübersicht beigefügt, auf welcher auch die Einzelteile durch doppelte Großbuchstaben benannt sind.

Auf der Zeichnung 1 ist der komplette Fahrradsattel in der Seitenansicht dargestellt. Sichtbar dabei sind das Satteloberteil und M6-Sterngriff, das Satteluntergestell mit Tragrohr und Rohrschaft sowie den Winkelblechen. Außerdem ein Teil des Federpaketes mit dem Bundbolzen und der Gewindedorn mit M8-Sterngriff und den Scheiben.

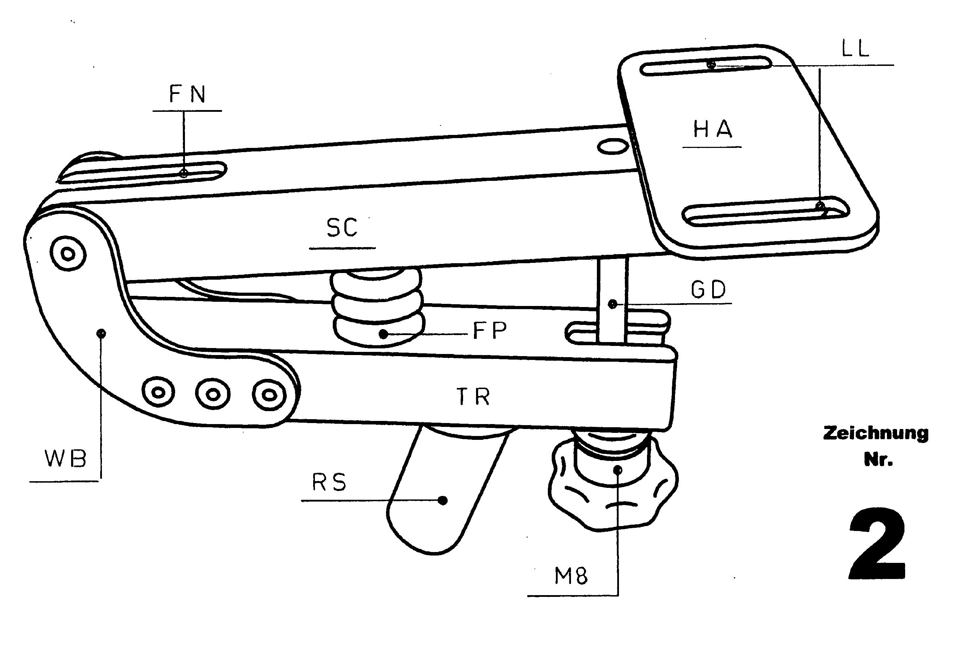

Zur Zeichnung 2. Hier ist die komplette Konstruktion ohne das Satteloberteil dargestellt. Die Materialien bestehen aus Kunststoff, Halbzeug wie Aluminiumrohre, Nirosta- und Al-Blech, 8er-Rundstahl, Blindnieten und Scheiben aus Gummi und Stahl. Alle Teile sind miteinander entweder verschweißt, verschraubt, vernietet oder verklebt.

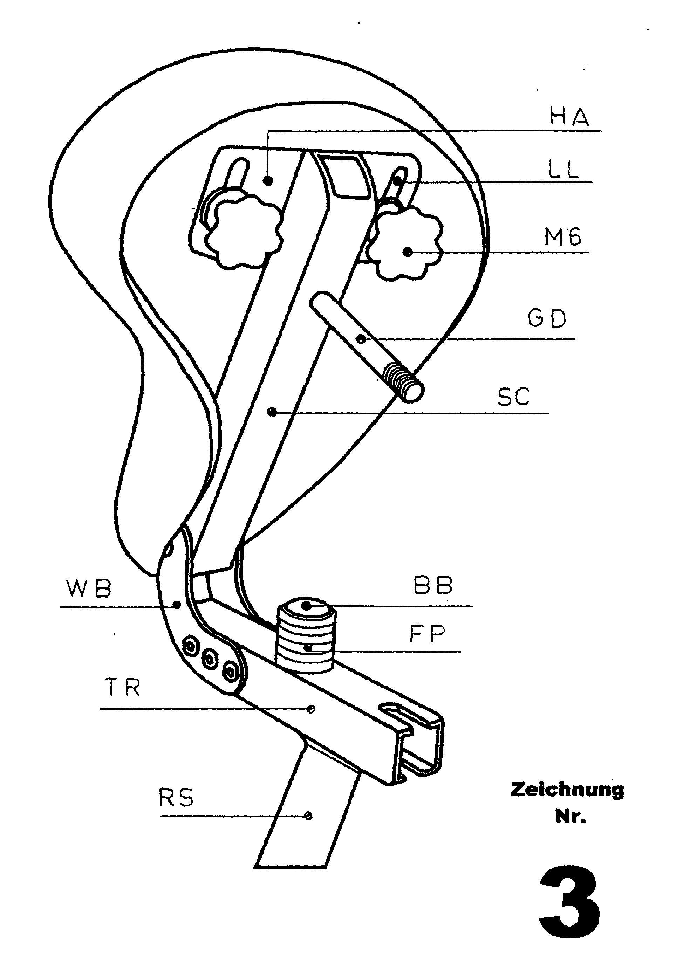

Die Zeichnung 3 zeigt das Satteloberteil von der Unterseite. Die 3 integrierten M6-Gewindebolzen dienen der Befestigung auf der Schwinge. Der vordere Gewindebolzen ist mit einem Drehteil verschraubt. Letzteres dient der beweglichen Arretierung des Satteloberteils in der Führungsnut der Schwinge.

Die beiden hinteren Gewindebolzen werden in den Langlöchern des Halters aufgenommen und mittels zweier M6-Sterngriffe wird das Satteloberteil befestigt.

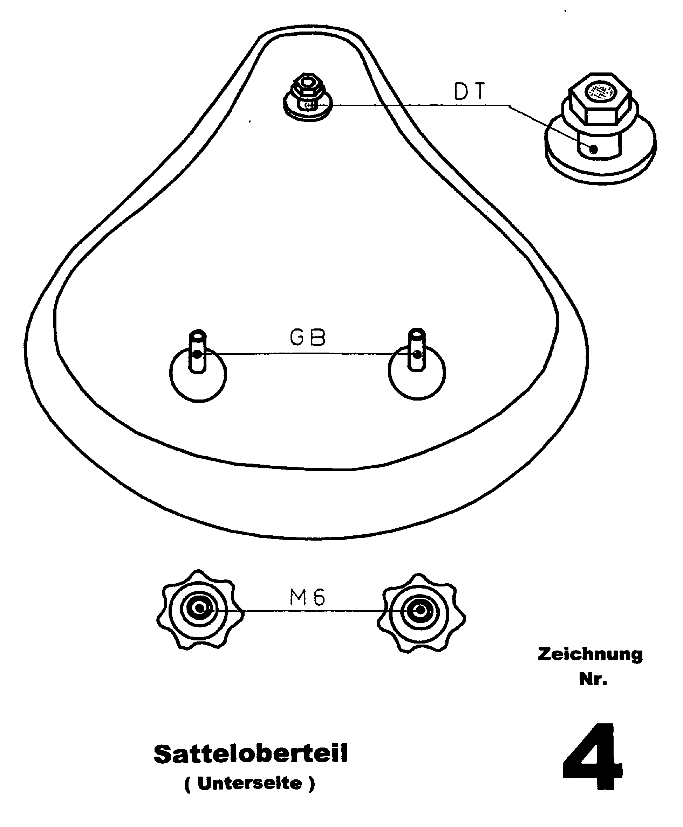

Schlussendlich ist auf der Zeichnung 4 nochmals die Gesamtkonstruktion in 3D bildlich dargestellt.
Um die Möglichkeit zu haben, verschiedene Satteloberteile zu verwenden,(Trecking, Sport, City) ist das Satteloberteil werkzeuglos austauschbar. Das Satteloberteil wird mit dem beschriebenen Drehteil von der Führungsnut der Schwinge aufgenommen und die hinteren 2 Gewindebolzen in den Langlöchern im Halter mit 2 M6-Sterngriffen (Spannmuttern) verschraubt. Mit dem Lösen der Sterngriffe ist eine Längseinstellung oder ein Austausch des Satteloberteils problemlos möglich.
Nach dem Aufklappen der Schwinge mit dem Satteloberteil kann auch das Federpaket, bestehend aus einem Bundbolzen mit halbrundem Kopf und den Gummischeiben, abgezogen und die Gummischeiben (Federscheiben) von weich auf hart, umgestellt (umgesteckt) werden.
Über das Drehgelenk zwischen Schwinge und den gerundeten Winkelblechen vom Untergestell, kann das Satteloberteil radial bewegt und durch das vertikal bewegliche Federpaket eine gedämpfte Federung erzeugt werden.
Durch das Verschrauben des Gewindedorns mit dem M8-Sterngriff ist der Sattel gegen Aufklappen gesichert.
Mit dieser Konzeption ist auch die Vorspannung des Federpaketes und die Neigungseinstellung möglich. Die beigelegten Gummischeiben dämpfen einen eventuell harten Rückschlag beim Durchfedern infolge eines Schlaglochs ab.

### Zeichnungsübersicht

| Zg-Nr. | Zeichnungs-Benennung |
|---|---|
| 1 | Fahrradsattel, Seitenansicht |
| 2 | Schwinge mit Sattel-Untergestell |
| 3 | Sattel aufgeklappt |
| 4 | Satteloberteil mit Gewindebolzen und Drehteil |

### Einzelteil-Benennung

### Bezeichnung

- SO =: Sattel-Oberteil (Sitzelement)
- SC =: Schwinge
- FP =: Federpaket mit Bundbolzen und Gummischeiben
- BB =: Bundbolzen
- GD =: Gewindedorn
- WB =: Winkelblech
- TR =: Tragrohr
- RS =: Rohrschaft
- M6 =: M6-Sterngriff
- M8 =: M8-Sterngriff
- HA =: Halter
- DG =: Drehgelenk
- FN =: Führungsnut für Drehteil vom Satteloberteil
- LL =: Langlöcher
- DT =: Drehteil
- GB =: Gewindebolzen

## Patentansprüche

1. Fahrradsattel bestehend aus einem Satteluntergestell mit einem Tragrohr (TR) und einem Rohrschaft (RS); am Tragrohr (TR) befestigten Winkelblechen (WB); einer Schwinge (SC), die über ein Drehgelenk (DG) mit den Winkelblechen (WB) verbunden ist; einem sich zwischen der Schwinge (SC) und dem Satteluntergestell befindenden Federpaket (FP) auf welchem die Schwinge (SC) aufliegt, **dadurch gekennzeichnet, dass** das Federpaket (FP) aus einem Bundbolzen (BB) und wechselbaren Gummischeiben besteht, wobei der Bundbolzen (BB) über zwei Bohrungen im Tragrohr (TR) des Satteluntergestelles lose führbar ist, und das Öffnen und Schließen des Fahrradsattels, sowie die Vorspannung des Federpaketes (FP) mittels einem am hinteren Ende der Schwinge (SC) befestigten Gewindedorns (GD) erfolgt, wobei der Gewindedorn (GD) beweglich mit dem Satteluntergestell verbunden ist und mit einem Sterngriff (M8) verstellbar gesichert ist.

2. Fahrradsattel nach Anspruch 1, **dadurch gekennzeichnet, dass** der Bundbolzen (BB) des Federpakets (FP) von Hand abziehbar und nach dem Wechsel der Gummischeiben wieder in das Tragrohr (TR) des Satteluntergestells aufsteckbar ist.

3. Fahrradsattel nach einem der vorhergehenden Ansprüche, **dadurch gekennzeichnet, dass** die Schwinge (SC) eine Führungsnut (FN) und zwei Langlöcher (LL) eines auf der Oberseite der Schwinge sich befindenden Halters (HA) für die Befestigung eines Satteloberteils (SO) aufweist.

4. Fahrradsattel nach einem der vorhergehenden Ansprüche, **dadurch gekennzeichnet, dass** der Fahrradsattel ein Satteloberteil (SO) mit drei integrierten Gewindebolzen (GB) aufweist, wobei der vordere Gewindebolzen der Befestigung eines Drehteils (DT) dient, welches in der Führungsnut (FN) der Schwinge (SC) aufgenommen wird, und die beiden hinteren Gewindebolzen in den Langlöchern (LL) des Halters (HA) auf der Schwinge (SC) mit zwei Sterngriffen (M6) verschraubt sind.

5. Fahrradsattel nach einem der vorhergehenden Ansprüche, **dadurch gekennzeichnet, dass** das Satteloberteil (SO) nach dem Lösen der zwei Sterngriffen (M6) in der Länge verstellbar und/oder gegen ein anderes werkzeuglos austauschbar ist.

## Claims

1. Bicycle saddle consisting of a saddle understructure with a supporting tube (TR) and a tubular shaft (RS), angular plates (WB) attached to the supporting tube (TR), a rocker (SC) connected to the angular plates (WB) through a pivot joint (DG), the rocker resting on a springassembly (FP) located between the rocker (SC) and the saddle understructure, charcterized in that the spring assembly (FP) consists of a shoulder stud (BB) and changeable rubber discs, the shoulder stud being freely movable by way of two boreholes in the supporting tube (TR) of the saddle understructure, and the opening and closing of the saddle as well as the prestressing of the spring assembly (FP) being achieved by means of a threaded arbor (GD) which is attached to the back end of the rocker (SC), said threaded arbor (SC) being movably connected to the saddle understructure and adjustably secured by means of a star knob (M8).

2. Bicycle saddle according to claim 1, **characterized in that** the shoulder stud (BB) of the spring assembly (FP) is manually removable and can be fitted back into the supporting tube (TR) of the saddle understructure after the rubber discs have been changed.

3. Bicycle saddle according to one of the preceding claims, **characterized in that** the rocker (SC) has a guiding slot (FN) and two elongated holes (LL) in a holder (HA) situated at the top of the rocker (SC) which serve to mount the saddle superstructure (SO).

4. Bicycle saddle according to one of the preceding claims, **characterized in that** the bicycle saddle has a saddle superstructure (SO) with three integrated threaded bolts (GB), the front end threaded bolt serving to mount a turned part (DT) which is accommodated in the guiding slot (FN) of the rocker (SC), and the two rear end threaded bolts being screwed through the elongated holes (LL) onto the holder (HA) on top of the rocker (SC) by means of two star knobs (M6).

5. Bicycle saddle according to one of the preceding claims, **characterized in that** the saddle superstructure (SO) is changeable in length and/or exchangeable for another, without tools, by releasing the two star knobs (M6).

## Revendications

1. Selle de vélo composée d'une base avec tube porteur (TR) et d'une tige de selle (RS); des tôles angulaires (WB) fixées sur le tube porteur (TR), une bielle oscillante (SC) connectée aux tôles angulaires (WB) moyennant une charnière (DG), un ensemble de suspension (FP) situé entre la bielle oscillante (SC) et la base de la selle, sur lequel repose la bielle oscillante (SC), **caractérisée de sorte que** l'ensemble de suspension (FP) se compose d'un goujon à collet (BB) et des rondelles caoutchouc remplaçables, alors que le goujon à collet (BB) peut être guidé librement à travers de deux perçages situés dans le tube porteur (TR) de la base de la selle; le verrouillage et le déverrouillage de la selle du vélo ainsi que la précontrainte de l'ensemble de suspension (FP) se réalisent moyennant une broche filetée (GD) fixée à l'arrière de la bielle oscillante (SC); le mouvement de la broche filetée (GD) étant guidé dans la base de la selle et son amplitude étant réglable par une poignée-étoile (M8).

2. Selle du vélo selon prétention 1, **caractérisée de sorte que** le goujon à collet (BB) de l'ensemble de suspension (FP) peut être enlevé à la main et remonté dans le tube porteur (TR) de la base de la selle après avoir substitué les rondelles caoutchouc.

3. Selle du vélo selon une des prétentions antérieures, **caractérisée de sorte que** la bielle oscillante (SC) présente une rainure de guidage (FN) ainsi que deux trous oblongs (LL) dans un support (HA) situé sur la face supérieure de la bielle prévus pour la fixation de la partie de dessus de la selle (SO).

4. Selle du vélo selon une des prétentions antérieures, **caractérisée de sorte que** sa partie de dessus (SO) soit équipée de trois goujons filetés intégrés (G8), le goujon fileté avant servant à la fixation d'une partie tournante (DT) logée dans la rainure de guidage (FN) de la bielle oscillante (SC), les deux goujons filetés à l'arrière servant à fixer la bielle oscillante (SC) avec deux poignées-étoile (M6) dans les trous oblongs (LL) du support (HA).

5. Selle du vélo selon une des prétentions antérieures, **caractérisée de sorte que** la partie de dessus (SO) est réglable en longueur après avoir dévissé les deux poignées-étoile (M6) et/ou qu'elle peut être remplacée sans outil.
